**Europäisches Patentamt**

**European Patent Office**

**Office européen des brevets**

(19)

(11) Veröffentlichungsnummer: **0 152 762
B1**

(12) **EUROPÄISCHE PATENTSCHRIFT**

(45) Veröffentlichungstag der Patentschrift:
**24.05.89**

(21) Anmeldenummer: **85100397.0**

(22) Anmeldetag: **16.01.85**

(51) Int. Cl.⁴: **E 21 B 43/24, E 21 B 43/25**

(54) Verfahren zur verbesserten Entölung unterirdischer Erdöllagerstätten.

(30) Priorität: **14.02.84 DE 3405201**

(43) Veröffentlichungstag der Anmeldung:
**28.08.85 Patentblatt 85/35**

(45) Bekanntmachung des Hinweises auf die Patenterteilung:
**24.05.89 Patentblatt 89/21**

(84) Benannte Vertragsstaaten:
**AT DE FR GB NL**

(56) Entgegenhaltungen:
**US-A- 1 379 657
US-A- 2 779 416
US-A- 2 838 116
US-A- 3 369 603**

(73) Patentinhaber: **CHEMIE HOLDING
AKTIENGESELLSCHAFT, Postfach 296 St.
Peter-Strasse 25, A-4021 Linz (AT)**

(84) Benannte Vertragsstaaten: **FR GB NL AT**

(73) Patentinhaber: **Lentia Gesellschaft mit beschränkter
Haftung, Arabellastrasse 4 Postfach 81 05 08,
D-8000 München 81 (DE)**

(84) Benannte Vertragsstaaten: **DE**

(72) Erfinder: **Heinemann. Zoltan. Dr., Dirnböckweg 19/3,
A-8700 Leoben (AT)**
Erfinder: **König. Heinz. Dr., Stiblerweg 7, A-4020 Linz
(AT)**
Erfinder: **Stern, Gerhard. Dr., Unterrudersbach 7,
A-4180 Sonnberg I.M. (AT)**

## Beschreibung

Die Erfindung betrifft ein Verfahren zur verbesserten Entölung unterirdischer Erdöllagerstätten durch selektive und reversible Verringerung der Durchlässigkeit beim Heißwasser- und/oder Dampffluten.

Dampffluten und Heißwasserfluten sind thermische EOR-Verfahren (EOR = Enhanced Oil Recovery) zur Gewinnung von Erdöl aus Lagerstätten und werden vorwiegend zur Förderung relativ dickflüssiger Öle oder Teere angewendet. Zur Erzielung eines guten Entölungsgrades muß das Verhältnis M der Mobilität des Flutmediums (Dampf bzw. Wasser) zur Öl-Mobilität erniedrigt werden. Dies geschieht beim Dampffluten und beim Heißwasserfluten durch Aufheizung der Lagerstätte mittels des Wärmeinhaltes der Flutmedien. Da die Öl-Viskosität bei Temperaturerhöhung meist stärker abnimmt als die Viskosität der Flutmedien, wird das Mobilitätsverhältnis M verbessert und dadurch eine Erhöhung des Entölungsgrades der Lagerstätte erreicht.

Im Idealfall einer Dampf- oder Heißwasserflutung breitet sich die erwärmte Zone gleichmäßig in der Lagerstätte aus und das Flutmedium verdrängt das Öl gleichmäßig zu den Fördersonden. Dies ist in der Praxis jedoch nie der Fall, da Lagerstätten nicht homogen sind und aus Schichten mit unterschiedlichen Eigenschaften bestehen, die durch impermeable Einlagerungen voneinander getrennt sein können. Es entstehen Kanäle, in denen sich ein Teil des Flutmediums schneller vorwärtsbewegt und frühzeitig zur Produktionssonde gelangt. Dies soll etwa nach US-PS 4 250 963 dadurch verhindert werden, daß mit dem Wasserdampf ein Monomeres, wie z.B. Styrol, mitgeführt wird, das an der Temperaturfront kondensiert und bei einer Temperatur unterhalb von ca. 120 °C zu Polystyrol polymerisiert. Der Nachteil dieses und vieler ähnlicher Polymerisationsverfahren besteht darin, daß die Polymerisation irreversibel ist, wodurch die Lagerstätte an dieser Stelle für immer verstopft bleibt.

Nach US-PS 4 232 741 wird in einem sehr komplizierten Verfahren mit Hilfe einer Stickstofferzeugenden Substanz, einer oberflächenaktiven Substanz, eines pH-Kontrollsystems und einer Säure-freisetzenden Substanz an einer gewünschten Stelle der unterirdischen Formation ein Schaum erzeugt, der ebenfalls die Formation verstopft. Abgesehen davon, daß es sehr schwierig ist, in einer weitgehend unbekannten unterirdischen Formation ein so kompliziertes Verfahren an einer ganz bestimmten Stelle ablaufen zu lassen, bewirkt die Schaumbildung eine einmalige Verstopfung, die so lange dauert, als der Schaum existiert. Nach Zusammenbruch des Schaumes ist die Formation an dieser Stelle wieder durchlässig, und es kann wieder Kanalbildung eintreten.

Ein weiterer Grund für eine Kanalbildung und damit für eine ungenügende Entölung der Lagerstätte besteht darin, daß Wasserdampf eine wesentlich geringere Dichte als Öl hat und daher die Dampfzunge danach strebt, den obersten Teil der Lagerstättenschicht einzunehmen und in Form eines schmalen Fingers die Produktionssonde zu erreichen. Dies soll nach Can. PS 1 080 614 dadurch verhindert werden, daß der injizierte Dampf, der üblicherweise einen mehr oder minder großen Anteil an Wasser enthält, in eine gasförmige und eine flüssige Phase aufgetrennt, und die flüssige Phase oberhalb der gasförmigen Phase in die Formation eingebracht wird. Abgesehen von dem zusätzlichen apparativen Aufwand wird auch hier die Gasphase das Bestreben haben, nach oben zu wandern und mit der flüssigen Phase konkurrieren und der unterste Teil der Lagerstätte wird wieder nicht vom Flutmedium erfaßt werden. Ist die Lagerstätte inhomogen, und diese Inhomogenität wie im Normalfall nicht vorauszuberechnen, wird die Gasphase unvorhersehbare Finger bilden und der Flüssigphase unter Bildung von Kanälen wieder vorauseilen.

Demgegenüber konnte nun ein Verfahren zur Entölung unterirdischer Lagerstätten gefunden werden, bei dem die Durchlässigkeit einer unterirdischen Formation selektiv an den Stellen höchster Permeabilität und in reversibler Form verringert wird. Die Verringerung der Permeabilität des Gesteins für das Flutmedium ist einer Verringerung des Verhältnisses M der Mobilität des Flutmediums zur Öl-Mobilität gleichzusetzen, was zu einer Erhöhung des Entölungsgrades führt.

Gegenstand der vorliegenden Erfindung ist demnach ein Verfahren zur verbesserten Entölung unterirdischer Erdöllagerstätten durch selektive und reversible Verringerung der Durchlässigkeit beim Heißwasser- und/oder Dampffluten, das dadurch gekennzeichnet ist, daß über eine oder mehrere Injektionsbohrungen zumindest zeitweise Heißwasser und/oder Wasserdampf als Flutmedium in die Lagerstätte injiziert wird, das in wirksamer Menge eine oder mehrere bei Lagerstättentemperatur wenig wasser- und öllösliche, in Heißwasser und/oder Wasserdampf jedoch gut lösliche oder flüchtige Substanzen, deren Schmelzpunkt über der Lagerstättentemperatur liegt, wie 2,6-Dihydroxynaphthalin, 1,5-Dihydroxynaphthalin, Leukoaurin, Tyrosin, 9,10-Anthrachinon, Acridon oder 4,4'-Dihydroxybiphenyl enthält, die sich mit dem Heißwasser oder dem Dampf durch die Lagerstätte bewegen und die bevorzugt an jenem Teil der Temperaturfront, der sich am raschesten vorwärtsbewegt, durch Abscheiden als Feststoff die Poren der Lagerstätte temporär und reversibel verengen, bis sich durch nachströmendes Flutmedium der Feststoff wieder auflöst oder verflüchtigt, wodurch insgesamt eine areale und vertikale Vergleichmäßigung der Temperaturfront erfolgt.

Nach dem erfindungsgemäßen Verfahren wird eine Substanz mit einem Schmelzpunkt über der Lagerstättentemperatur, üblicherweise über 80 °C, welche im Flutmedium Heißwasser gut löslich oder mit dem Flutmedium Dampf flüchtig ist und bei initialen Lagerstättentemperatur wenig löslich ist, zusammen mit dem heißen Flutmedium durch eine Injektionssonde in die Lagerstätte gepreßt und bis zur Temperaturfront transportiert, wo sie sich abkühlt, verfestigt, d.h. üblicherweise kristallisiert und in diesem Bereich die Permeabilität für das Flutmedium verringert. Im nachströmenden heißen Flutmedium löst sich oder sublimiert die Substanz gemäß ihren physikalischen Eigenschaften und das Flutmedium zusammen mit der gelösten oder verdampften Substanz wandert weiter, bis sich die Substanz neuerlich an der Temperaturfront abscheidet. Die Abscheidung der Substanz als Feststoff und damit die Reduktion der Permeabilität für das Flutmedium ist temporär und reversibel, es findet in der Lagerstätte ein ständiger Wechsel zwischen Abscheidung und Wiederauflösung bzw. Verdampfung im Flutmedium statt, das Flutmedium transportiert einen Substanzpolster jeweils zur Temperaturfront.

Der Entölungsgrad setzt sich aus dem großräumig wirksamen volumetrischen Flutwirkungsgrad $E_v$ und dem lokal wirksamen Verdrängungsgrad $E_d$ zusammen. Zunächst werden die Vorgänge beschrieben, die zur Erhöhung des Flutwirkungsgrades durch die erfindungsgemäßen Maßnahmen führen.

Bildet aus einem der vorerwähnten Gründe das Flutmedium einen Kanal oder Finger, so wird in diesem Finger nicht nur mehr Flutmedium als im langsamer durchfluteten Teil der Lagerstätte nach vorne bewegt, es ist auch in diesem Finger mehr Substanz enthalten, da sie mit dem Flutmedium nachgebracht wird und sich das Flutmedium wesentlich rascher vorwärtsbewegt als die Temperaturfront. Je mehr Substanz sich an der Temperaturfront abscheidet, umso größer ist die Reduktion der Permeabilität, umso kleiner wird die Geschwindigkeit des Flutmediums, umso weniger Wärme steht zur Aufwärmung des betreffenden Teiles der Lagerstätte und damit zur Fortbewegung der Temperaturfront in diesem Teil zur Verfügung. In diesem Teil der Lagerstätte wird die rasche Fortbewegung der Temperaturfront durch die erfindungsgemäße Maßnahme verlangsamt. Jene anderen Teile der Lagerstätte, die außerhalb der Hauptfließrichtungen liegen, weil sie entweder von vornherein eine geringere Permeabilität besitzen oder in Anbetracht der Sondenanordnung ungünstig liegen, haben sich aber inzwischen ebenfalls, jedoch entsprechend langsamer vorwärts bewegt. Ihnen wurde Gelegenheit zum Aufholen gegeben, sodaß insgesamt eine Vergleichmäßigung der Frontgeschwindigkeit in einem selbstregulierenden Prozeß erfolgt.

Ähnlich wie dieser großräumig auftretende Effekt, der den volumetrischen Flutwirkungsgrad $E_v$ erhöht, indem auch jene Teile der Lagerstätte erfaßt und entölt werden, die sonst nicht vom Flutmedium erreicht werden, kann auch eine Erhöhung des Ölverdrängungsgrades $E_d$ im lokalen Bereich der Porenkanäle auftreten. Dieser lokale Effekt ist vorwiegend im Bereich der Heißwasserflutung nachweisbar, wo der relativ schlechte, niedrige Verdrängungsgrad bedeutend verbessert werden kann. Es ist bekannt, daß dann, wenn im Lagerstättengestein nebeneinander zwei Phasen, Wasser und Öl, fließen, ein Teil der möglichen Fließwege, der sog. Porenkanäle, ölführend, der andere Teil wasserführend ist. Nach dem erfindungsgemäßen Verfahren bewegt sich das heiße Flutmedium zusammen mit der gelösten oder verdampften Substanz vorerst ebenfalls in den wasserführenden Porenkanälen, da jedoch bei Abkühlung an der Temperaturfront gerade diese wasserführenden Porenkanäle durch Ausscheidung fester Substanz verengt werden, wird das heiße Flutmedium gezwungen, auf ölhältige Porenkanäle auszuweichen und auch diese zu entölen. Es wird somit auch der Verdrängungsgrad $E_d$ erhöht. Nachströmendes Flutmedium nimmt den Feststoff wieder auf und transportiert ihn weiter.

Als Flutmedium im erfindungsgemäßen Verfahren dienen sowohl Heißwasser als auch Wasserdampf oder eine Mischung von beiden. Heißwasser hat üblicherweise eine Injektionstemperatur von etwa 80 bis 300 °C, vorzugsweise von etwa 150 bis 250 °C, Wasserdampf eine Injektionstemperatur von etwa 110 bis 380 °C, vorzugsweise von etwa 200 bis 350 °C, Mischungen von Heißwasser und Wasserdampf üblicherweise eine Injektionstemperatur von etwa 150 bis 350 °C, wobei es sich um Gemische aus Dampf und Kondensat bzw. Naßdampf unterschiedlicher Qualität handeln kann. Die in der vorliegenden Beschreibung verwendeten Ausdrücke «Wasser» und «Heißwasser» umfassen sowohl mit dem Dampf mitgeführte Wassertröpfchen als auch Dampfkondensat, Süßwasser und Wasser aller Salinitätsgrade, wie sie in Lagerstätten vorkommen (0 bis 300 kg Salz/m³).

Wird eine Reduktion der Permeabilität für das Flutmedium Heißwasser angestrebt, so wird eine Substanz verwendet, die eine geringe Löslichkeit in kaltem Wasser, insbesondere eine Löslichkeit von weniger als 3 kg/m³ Wasser bei 20 °C und gute Löslichkeit in heißem Wasser, insbesondere eine Löslichkeit von mehr als 5 kg/m³ Wasser bei 200 °C und eine geringe Öllöslichkeit, insbesondere von weniger als 3 kg/m³ Öl bei 20 °C aufweist. Ihr Schmelzpunkt liegt über der Lagerstättentemperatur, meist über 80 °C, insbesondere über 150 °C, unter Lagerstättenbedingungen ist sie thermisch und chemisch ausreichend beständig.

Beispiele für solche heißwasserlösliche Substanzen sind starre aromatische mehrfach hydroxylierte Verbindungen, wie z.B. 2,6-Dihydroxynaphthalin oder 1,5-Dihydroxynaphthalin, substituierte oder nicht substituierte Bis-, Tris- oder Tetra-p-hydroxyphenylalkane oder -alkene oder daraus abgeleitete Verbindungen, wie z.B. Leukoaurin, oder schwerlösliche Aminosäuren, wie z.B. Tyrosin, besonders bevorzugt ist 1,5-Dihydroxynaphthalin.

Wird eine Reduktion der Permeabilität für das Flutmedium Dampf angestrebt, so wird eine Substanz verwendet, deren Schmelzpunkt ebenfalls oberhalb der Lagerstättentemperatur, meist über 120 °C, insbesondere über 200 °C, liegt und die sich bei dieser Temperatur in dem ihrem Dampfdruck entsprechenden Ausmaß in gasförmigem Zustand befindet. Sie weist bei 300 °C etwa einen Dampfdruck von mehr als 0,01 bar, insbesondere mehr als 0,03 bar, auf, ebenso besitzt sie geringe Löslichkeit in kaltem Wasser und in Öl sowie ausreichende thermische und chemische Beständigkeit unter Lagerstättenbedingungen. Beispiele für solche sublimierbare Verbindungen sind mehrkernige Verbindungen mit starrer Molekülstruktur, wie z.B. 9,10-Anthrachinon oder Acridon.

Das erfindungsgemäße Verfahren ist sowohl bei der Ölverdrängung durch Heißwasser mit einer heißwasserlöslichen Substanz als auch bei der Ölverdrängung durch Dampf mit einer dampfflüchtigen Substanz einsetzbar. Da beim Dampffluten üblicherweise Naßdampf injiziert wird, ist es weiter sowohl möglich, eine flüchtige Substanz als auch eine im Heißwasseranteil des Naßdampfes gelöste Substanz als auch beide Substanzen nebeneinander oder nacheinander einzubringen. Die flüchtige Substanz übt ihre permeabilitätsreduzierende Wirkung beim Übergang vom gasförmigen in den festen Zustand an der Kondensationsfront des Dampfes aus, während die heißwasserlösliche Substanz sich am Übergang von Heißwasserzone zu Kaltwasserzone so lange abscheidet, bis sie vom nachfolgenden Heißwasser wieder aufgelöst und weiter transportiert wird, wobei das Heißwasser teils vom Wasser des Naßdampfes stammt, teils durch Kondensation der Dampfphase gebildet wurde und auch Anteile von Injektionswasser und Lagerstättenwasser enthalten kann.

Das erfindungsgemäße Verfahren bewirkt beim Heißwasserfluten sowohl Verbesserungen des Flutwirkungsgrades $E_v$ als auch des Verdrängungsgrades $E_d$, und beim Dampffluten, wo vor allem die Gefahr der Zungenbildung und des «overridings», der Dampfkanalbildung am oberen Teil einer mächtigen Schicht, besteht, vor allem eine Verbesserung des volumetrischen Flutwirkungsgrades $E_v$. Das erfindungsgemäße Verfahren kann bei allen Lagerstätten eingesetzt werden, die sich für thermische Entölungsverfahren eignen, insbesondere bei Ölen mit einer Dichte zwischen 11 und 25° API, einer Viskosität zwischen 20 und 100 000 mPas einer Porosität des Lagerstättengesteins von über 15% und einer Permeabilität von über $0,05.10^{-12}$ m².

Da sich die Temperaturfront wesentlich langsamer als die Front des Flutmediums zur Fördersonde hin bewegt, ist das Verfahren sowohl bei Beginn eines Flutverfahrens als auch während des Verlaufes solcher Flutprozesse durch Nachschicken eines Substanzpolsters möglich.

Die Substanz wird mit dem Flutmedium in einer Konzentration von etwa 0,0002 bis 0,3 kg Substanz/kg Flutmedium eingebracht. Wird die Substanz kontinuierlich eingebracht, so beträgt die Konzentration etwa 0,0002 bis 0,05 kg Substanz/kg Flutmedium, wird sie diskontinuierlich zur Erreichung eines Substanzpolsters eingebracht, so beträgt die Konzentration etwa 0,002 bis 0,3 kg Substanz/kg Flutmedium. Sie kann auch in Form einer gesättigten Lösung eingebracht werden.

Die erfindungsgemäße Reduktion der Permeabilität wird mit dem Reduktionsfaktor R, dem Verhältnis der Permeabilität nach Substanzsättigung zur initialen Permeabilität, ausgedrückt.

Die bei der Durchführung des Verfahrens zur Erzielung der Permeabilitätsreduktion notwendige Substanzmenge ist gering. Aus Beispiel 1, Tabelle 2, ist ersichtlich, daß im Falle der Substanz A bei einer Substanzsättigung von nur 0,64% des Porenvolumens (PV) der Reduktionsfaktor 0,45, bei einer Substanzsättigung von 0,84% PV der Reduktionsfaktor 0,22 und bei einer Substanzsättigung von 1,37% des PV der Reduktionsfaktor 0,04 beträgt. Das bedeutet, daß die Abscheidung von Substanz A als Feststoff im Ausmaß von nur 0,64% des Porenvolumens ausreicht, um die Permeabilität auf ca. den halben Wert (0,45) zu reduzieren. Sind 0,84% PV mit Substanz erfüllt, beträgt die Permeabilität nur mehr 22% und wenn 1,37% des PV von Substanz erfüllt sind, beträgt die Permeabilität nur mehr 4% des Anfangswertes.

In Beispiel 2 wird gezeigt, daß durch Einsatz einer mit Dampf sublimierbaren Substanz ebenfalls die Permeabilität reduziert wird. Während im Versuch ohne Substanz infolge der niedrigen Viskosität des Dampfes gegenüber Wasser die Druckdifferenz sank und nach 1,8 PV nicht mehr meßbar war, wurde im erfindungsgemäßen Versuch mit Abscheidung der Substanz B im Porenraum die Druckdifferenz zwischen Kerneingang und Kernausgang immer größer, die Permeabilität des Gesteins für die Dampfphase wurde erniedrigt. Für die Lagerstätte bedeutet eine Permeabilitätsreduktion für die Dampfphase eine Verringerung des Mobilitätsverhältnisses M, was sich vor allem in einer Erhöhung des großräumigen Flutwirkungsgrades auswirkt.

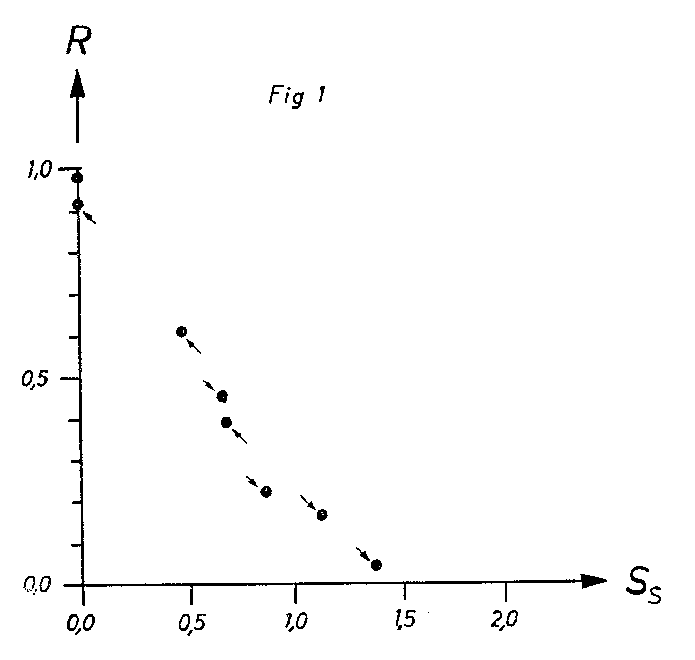

Während Beispiel 1 und 2 angeben, daß Substanzen in ein Lagerstättengestein eingebracht werden können und dort die Permeabilität für die Wasser- bzw. Dampfphase reduzieren, zeigen die Beispiele 3 und 4, daß die Permeabilitätsreduktion in der Lagerstätte reversibel ist, die abgeschiedene Substanz kann wieder ausgetrieben und weitertransportiert werden. Die in Beispiel 3 gefundenen Reduktionsfaktoren R beim partiellen Eluieren der Substanz A bei 100 °C sind in Tabelle 5 zusammengestellt und liegen, wie Figur 1 angibt, innerhalb der Meßgenauigkeit auf derselben Kurve, wie die in Beispiel 1, Tabelle 2, beim Sättigen mit Substanz A gefundenen Reduktionsfaktoren. Beispiel 4 zeigt, daß nach dem Fluten mit 1,4 PV Wasser bei 174 °C der Reduktionsfaktor 0,92 beträgt, und die Substanz A vollständig aufgelöst und aus dem Bohrkern entfernt werden konnte. Die Abweichung des Reduktionsfaktors vom theoretischen Wert 1 erklärt sich einerseits aus der Meßtoleranz, andererseits durch mögliche Strukturänderungen des Bohrkernes aufgrund von Quellungs- bzw. Schrumpfungsvorgängen der Tonmineralien.

Die Beispiele 5 und 6 zeigen, daß durch Heißwasserfluten unter Anwendung des erfindungsgemäßen Verfahrens auch bei Anwesenheit von Öl im Lagerstättengestein eine Reduktion der Permeabilität sowie eine Mehrentölung stattfindet. Wie aus den Tabellen 8 und 10 hervorgeht, beträgt der Ölverdrängungsgrad $E_d$ bei herkömmlichem Heißwasserfluten ohne Substanzzusatz 0,34, 0,35 und 0,33, bei erfindungsgemäßem Fluten mit Substanz A, 0,46, 0,42 und 0,42, bei erfindungsgemäßem Fluten mit Substanz C 0,46 und 0,49 und bei erfindungsgemäßen Fluten mit Substanz D 0,45 und 0,47. Dies bedeutet sowohl unter Anwendung von Substanz A als auch von den Substanzen C und D eine beträchtliche Mehrentölung. Während eine Verbesserung des großräumigen Flutwirkungsgrades $E_v$ aufgrund der Permeabilitätsreduktion und der daraus resultierenden Verbesserung des Mobilitätsverhältnisses M abgeleitet werden kann, konnte der Anteil des Verdrängungsgrades $E_d$ an der Mehrentölung direkt in der Flutapparatur nachgewiesen werden.

Beispiel 7 zeigt, das beim Dampffluten ölhaltiger Bohrkerne mit einer in der Dampfphase wirksamen Substanz unter Anwendung des erfindungsgemäßen Verfahrens die Druckdifferenz zwischen Kerneingang und Kernausgang gegenüber dem Vergleichsversuch wesentlich erhöht war. Diese erhöhte Druckdifferenz entspricht einer verminderten Permeabilität und somit einem großräumig erhöhten Flutwirkungsgrad $E_v$ in der Lagerstätte, der in einem kleinen Bohrkern nicht zum Ausdruck kommen kann, sondern nur in einem Feldversuch zu demonstrieren ist. Die Entölungsdaten in Tabelle 11 zeigen, daß durch Einbringen von dampfförmiger Substanz B keine Beeinträchtigung der anderen Komponente des Gesamt-Entölungsgrades, nämlich des Verdrängungsgrades $E_d$, erfolgte.

Beispiel 1
Reduktion der Permeabilität in wäßriger Phase
Für die Flutversuche wurden zylindrisch geschnittene Bohrkerne aus Valendis-Sandstein mit einer Porosität von ca. 23%, einer Permeabilität im Bereich von 0,9 bis $2,5.10^{-12}m^2$, einem Durchmesser von 3,9 cm und einer Länge von 50 cm als Modellformation eingesetzt. Jeder Kern wurde in ein Stahlrohr eingeführt und beidseitig mit einer temperaturbeständigen Zementmischung vergossen. Die Stahlrohre wurden dann an den Stirnseiten mit Flanschen verschweißt. Die so vorbereiteten Kerne wurden evakuiert, mit Kohlendioxid geflutet, wieder evakuiert und dann mit deionisiertem Wasser gesättigt. Während des Durchpumpens von deionisiertem Wasser bei 20°C wurde der Differenzdruck zwischen Kerneingang und Kernausgang gemessen. Mit Hilfe der Darcy-Gleichung wurde daraus die initiale Permeabilität des betreffenden Kernes berechnet.

In eine druckfeste, thermostatierbare Flutanlage, welche mit Temperaturmeßeinrichtung, Manometer am Eingang und am Ausgang sowie einem Druckhalteventil ausgerüstet war, wurde ein Kern eingebaut und unter Druck auf eine Temperatur von 150°C erwärmt. In einem Wirbelschichterhitzer wurde deionisiertes Wasser auf 150°C vorerhitzt und durch einen auf 150°C thermostatierten Substanzbehälter gepumpt. Im Substanzbehälter befand sich die in Glaswolle eingebettete Substanz A, deren relevante physikalische Daten in Tabelle 1 festgehalten sind.

Tabelle 1

Substanz A:
Chemische Zusammensetzung: 1,5-Dihydroxynaphthalin
Schmelzpunkt: 265°C
Dichte: $1,50.10^3$ kg/m³
Löslichkeit in destilliertem Wasser

| Temperatur (°C) | 20 | 60 | 100 | 150 | 160 | 170 | 180 | 200 | 250 |
|---|---|---|---|---|---|---|---|---|---|
| Löslichkeit (kg/m³) | 0,46 | 1,12 | 2,8 | 10 | 13 | 17 | 21 | 33 | 100 |

Die bei 150°C gesättigte Lösung von Substanz A wurde in den Kern injiziert. Nach Durchfluß einer Flüssigkeitsmenge, die mindestens einem Porenvolumen des Kerns entspricht (1 PV), wurde die Injektion unterbrochen und der Kern auf 20°C abgekühlt. Dadurch wurde die Abscheidung der Substanz in fester Form im Porenraum initiiert und die erwünschte Sättigung des Porenraumes mit Substanz A hergestellt. Schließlich wurde erneut die Permeabiltät bei 20°C bestimmt. Die erfindungsgemäße Reduktion der Permeabilität wird mit dem Reduktionsfaktor R, dem Verhältnis der Permeabilität nach Substanzsättigung zur initialen Permeabilität, ausgedrückt. Der gleiche Vorgang wurde mit anderen, aber gleichartigen Kernen bei 160°C, 170°C und 180°C mit bei diesen Temperaturen gesättigten Lösungen der Substanz A wiederholt. Zum Vergleich wurde ferner ein Flutversuch ohne Substanz A mit reinem Wasser bei 150°C durchgeführt.

Die Ergebnisse sind in Tabelle 2 zusammengefaßt. Die Menge der in 1 PV zurückgebliebenen festen Substanz (Sättigung $S_s$ in Volumsprozenten) ergibt sich aus der Löslichkeitsdifferenz der Substanz vor und nach der Abkühlung.

Tabelle 2

Reduktion der Permeabilität als Funktion der Sättigung der Gesteinsporen mit Substanz A

| Substanz | keine A | A | A | A |
|---|---|---|---|---|
| Fluttemperatur (°C) | 150 | 150 | 160 | 170 | 180 |
| Flutmenge (PV) | 1,2 | 1,2 | 1,1 | 1,1 | 1,0 |
| Abkühlzeit (h) | 24 | 50 | 24 | 20 | 48 |

Tabelle 2 (Fortsetzung)

Reduktion der Permeabilität als Funktion der Sättigung der Gesteinsporen mit Substanz A

| Initiale Permeabilitätsmessung: | | | | | |
|---|---|---|---|---|---|
| Injektionsrate ($m^3 s^{-1}.10^{-9}$) | 49,4 | 47,2 | 48,6 | 28,1 | 50,0 |
| Differenzdruck (bar) | 0,14 | 0,08 | 0,14 | 0,10 | 0,09 |
| Permeabilität ($m^2.10^{-12}$) | 1,48 | 2,47 | 1,45 | 1,17 | 2,32 |
| Permeabilitätsmessung nach Sättigung: | | | | | |
| Injektionsrate ($m^3 s^{-1}.10^{-9}$) | 48,6 | 50,0 | 33,3 | 28,3 | 33,3 |
| Differenzdruck (bar) | 0,14 | 0,19 | 0,44 | 0,65 | 1,35 |
| Permeabilität ($m^2.10^{-12}$) | 1,45 | 1,10 | 0,32 | 0,18 | 0,10 |
| Reduktionsfaktor R | 0,98 | 0,45 | 0,22 | 0,16 | 0,04 |
| Sättigung $S_s$ (%PV) | 0 | 0,64 | 0,84 | 1,10 | 1,37 |

PV: Porenvolumen

Reduktionsfaktor R: Verhältnis der Permeabilität nach Substanzsättigung zur initialen Permeabilität

Sättigung $S_s$: Sättigung mit Substanz in % des PV

Beispiel 2

Reduktion der Permeabilität in der Dampfphase

Als Kernmaterial wurden Bohrkerne mit 6 cm Durchmesser und 60 cm Länge des in Beispiel 1 beschriebenen Valendis-Sandsteins eingesetzt. Die in Stahlrohre eingebauten Kerne wurden evakuiert, mit Kohlendioxid geflutet, wieder evakuiert und dann mit deionisiertem Wasser gesättigt. Deionisiertes Wasser wurde mit konstanter Rate in den Wirbelschichterhitzer der Flutanlage gepumpt. Durch Verdampfung wurde Sattdampf von 275 °C erzeugt. Im Substanzbehälter befand sich sublimierbare Substanz B, in Glaswolle eingebettet. In Tabelle 3 sind die relevanten physikalischen Daten der Substanz B festgehalten.

Tabelle 3

Substanz B:
Chemische Zusammensetzung: 9,10-Anthrachinon
Schmelzpunkt: 286°C
Dichte: $1,44.10^3$ kg/m³

| Temperatur (°C) | 100 | 180 | 200 | 220 | 245 | 275 |
|---|---|---|---|---|---|---|
| Dampfdruck (mbar) | 0,002 | 0,73 | 2,4 | 6,7 | 23 | 85 |

Der aus dem Substanzbehälter austretende, bei 275 °C mit Substanz B gesättigte Sattdampf wurde in den Bohrkern injiziert. Der Verlauf der Druckdifferenz zwischen Kerneingang und Kernausgang, welcher ein Maß für die Permeabilität darstellt, wurde aufgezeichnet.

Zum Vergleich wurde ein analoger Versuch ohne Substanz B, aber unter sonst gleichen Bedingungen durchgeführt.

Die Ergebnisse sind in Tabelle 4 dargestellt.

Tabelle 4

Reduktion der Permeabilität des Gesteins für Dampf

| Substanz | | keine | B |
|---|---|---|---|
| Temperatur (°C) | | 275 | 275 |
| Injektionsrate ($m^3.s^{-1}.10^{-9}$) | | 18,1 | 18,2 |
| Geschwindigkeit der Dampffront ($m.s^{-1}.10^{-6}$) | | 13,6 | 13,9 |
| Transportkapazität des Dampfes (kg/kg) | | – | 0,0127 |
| Sättigung mit Substanz $S_s$(%PV) | | – | 1,9 |
| Druckdifferenz (bar) als Funktion der Injektionsmenge: | 0,5 PV | 0,06 | 0,07 |
| | 0,8 PV | 0,05 | 0,08 |
| | 1,0 PV | 0,03 | 0,08 |
| | 1,2 PV | 0,02 | 0,08 |
| | 1,5 PV | 0,01 | 0,12 |
| | 1,8 PV | unter 0,01 | 0,22 |

Beispiel 3
Reversibilität der Permeabilitätsreduktion

Der in Beispiel 1 bei 160 °C mit bei dieser Temperatur gesättigter Lösung von Substanz A behandelte und dann abgekühlte Bohrkern wurde mit 100 °C heißem Wasser geflutet. Nach jeweils 1 PV Flutmenge wurde das System auf 20 °C abgekühlt, die Druckdifferenz während der Durchströmung mit Wasser von 20 °C gemessen und daraus die Permeabilität berechnet. Der Reduktionsfaktor nach der partiellen Eluierung ergibt sich als Verhältnis der zuletzt gefundenen Permeabilität zur initialen Permeabilität.

Die Ergebnisse sind in Tabelle 5 zusammengefaßt.

Tabelle 5

| Flutmenge (PV Wasser) | 0 | 1 | 2 |
|---|---|---|---|
| Fluttemperatur (°C) | – | 100 | 100 |
| Initiale Permeabilität $(m^2.10^{-12})$ | 1,45 | 1,45 | 1,45 |
| Injektionsrate $(m^3.s^{-1}.10^{-9})$ | 33,3 | 33,3 | 33,3 |
| Druckdifferenz (bar) | 0,44 | 0,25 | 0,16 |
| Permeabilität $(m^2.10^{-12})$ | 0,317 | 0,558 | 0,872 |
| Reduktionsfaktor R | 0,22 | 0,38 | 0,60 |
| Sättigung $S_s$(%PV) | 0,84 | 0,65 | 0,46 |

Beispiel 4
Vollständige Reversibilität der Permeabilitätsreduktion

Der in Beispiel 1 bei 170 °C mit bei dieser Temperatur gesättigter Lösung von Substanz A behandelte und dann abgekühlte Bohrkern wurde mit 1,4 PV Wasser bei 174 °C geflutet. Danach wurde bei 20 °C die Permeabilität bestimmt.

Die Ergebnisse sind in Tabelle 6 zusammengefaßt.

Tabelle 6

| Flutmenge (PV Wasser) | 0 | 1,4 |
|---|---|---|
| Fluttemperatur (°C) | – | 174 |
| Initiale Permeabilität $(m^2.10^{-12})$ | 1,17 | 1,17 |
| Injektionsrate $(m^3.s^{-1}.10^{-9})$ | 28,3 | 28,3 |
| Druckdifferenz (bar) | 0,65 | 0,11 |
| Permeabilität $(m^2.10^{-12})$ | 0,18 | 1,08 |
| Reduktionsfaktor R | 0,16 | 0,92 |
| Sättigung $S_s$(%PV) | 1,10 | 0 |

Abschließend wurde der Kern auf restliche Substanzmengen untersucht. Es konnten keine Reste von Substanz A nachgewiesen werden.

Beispiel 5
Entölung von Bohrkernen durch Heißwasserfluten

Zylindrisch geschnittene Bohrkerne aus Valendis-Sandstein mit einer Porosität von 23%, einer Permeabilität von 0,9 bis 2,5 $m^2.10^{12}$, einem Durchmesser von 6 cm und einer Länge von 60 cm wurden, wie in Beispiel 1 beschrieben, in Stahlrohre eingebaut, mit Kohlendioxid gespült und mit deionisiertem Wasser gesättigt. Anschließend wurden sie unter lagerstättenähnlichen Bedingungen bei 50 °C und einem mittleren Druck von 30 bis 35 bar mit Rohöl geflutet. Das Rohöl hatte eine Viskosität von 1200 mPa.s bei 20 °C, von 210 mPa.s bei 44 °C, von 71 mPa.s bei 80 °C und eine Dichte von 0,938 bei 20 °C und von 0,889 bei 44 °C. Es wurde eine initiale Ölsättigung von 87 bis 92% des Porenvolumens erreicht.

In eine druckfeste, thermostatierbare Flutanlage wurde jeweils ein ölgesättigter Bohrkern eingebaut. In einem Wirbelschichterhitzer wurde deionisiertes Wasser auf 180 °C vorerhitzt und durch einen auf 180 °C thermostatierten Substanzbehälter gepumpt, in welchem sich Substanz A oder Substanz C, eingebettet in Glaswolle, befand. Beim Durchströmen des Substanzbehälters entstand eine mit Substanz A oder Substanz C gesättigte Lösung, welche in den Bohrkern injiziert wurde.

Die Löslichkeitsdaten der Substanz A wurden bereits in Beispiel 1, Tabelle 1, festgehalten. Tabelle 7 gibt die relevanten physikalischen Daten der Substanz C wieder.

Tabelle 7

Substanz C:
Chemische Zusammensetzung: Tyrosin
Schmelzpunkt: 317 °C
Dichte: $1,46.10^3 kg/m^3$
Löslichkeit in destilliertem Wasser:

| Temperatur (°C) | 20 | 40 | 60 | 80 | 100 | 180 |
|---|---|---|---|---|---|---|
| Löslichkeit $(kg/m^3)$ | 0,3 | 0,68 | 1,4 | 2,7 | 5,0 | 30 |

In der Flutanlage wurde das Fortschreiten der Temperaturfront in der Lagerstätte in der nachfolgend beschriebenen Weise simuliert. Der in ein Stahlrohr eingebaute Bohrkern befand sich zu Beginn des Flutversuches außerhalb der auf 180 °C thermostatierten Heizkammer und hatte eine Temperatur von 21 °C. Während des Flutvorganges wurde das Stahlrohr mit dem Kern langsam mit konstanter Geschwindigkeit in die Heizkammer geschoben. Die Temperaturfront befand sich jeweils am Eingang der Heizkammer. Der Temperaturverlauf wurde über die gesamte Kernlänge durch Temperaturfühler erfaßt.

Die aus dem Kern ausströmenden Fluida wurden in einem Separator aufgefangen und nach Durchgang von 1,8 bis 2,2 PV die produzierte Ölmenge bestimmt. Tabelle 8 enthält die Versuchsergebnisse von drei Vergleichsversuchen ohne Anwendung einer Substanz, drei Flutversuchen mit Substanz A und zwei Flutversuchen mit Substanz C.

#### Tabelle 8

**Verbesserung des Ölverdrängungsgrades beim Heißwasserfluten**

| Substanz | keine | keine | keine | A | A | A | C | C |
|---|---|---|---|---|---|---|---|---|
| Initiale Ölmenge ($m^3.10^{-6}$) | 3,32 | 3,32 | 3,50 | 3,40 | 3,49 | 3,53 | 3,27 | 3,20 |
| Initiale Ölsättigung $S_{oi}$ | 0,87 | 0,87 | 0,91 | 0,90 | 0,91 | 0,92 | 0,85 | 0,84 |
| Initiale Kerntemperatur(°C) | 21 | 21 | 21 | 21 | 21 | 21 | 21 | 21 |
| Fluttemperatur(°C) | 180 | 180 | 180 | 180 | 180 | 180 | 180 | 180 |
| Transportkapazität des Heißwassers (kg/m³) | – | – | – | 20,5 | 20,5 | 20,5 | 29,7 | 29,7 |
| Injektionsrate ($m^3 s^{-1}.10^{-9}$) | 8,58 | 8,48 | 8,56 | 7,94 | 7,92 | 7,67 | 6,58 | 6,89 |
| Frontgeschwindigkeit ($m.s^{-1}.10^{-6}$) | 7,08 | 7,25 | 6,94 | 7,08 | 6,94 | 5,56 | 5,58 | 5,28 |
| Errechnete Substanzsättigung $S_s$(%PV) | – | – | – | 2,5 | 2,5 | 3,0 | 3,9 | 4,3 |
| Injektionsmenge (PV) | 1,9 | 1,8 | 1,9 | 1,8 | 1,8 | 2,2 | 1,8 | 1,8 |
| Produzierte Ölmenge ($m^3.10^{-6}$) | 1,12 | 1,15 | 1,16 | 1,55 | 1,47 | 1,49 | 1,49 | 1,56 |
| Restölsättigung $S_{or}$ | 0,58 | 0,57 | 0,61 | 0,49 | 0,53 | 0,53 | 0,46 | 0,43 |
| Ölverdrägungsgrad $E_d$ | 0,34 | 0,35 | 0,33 | 0,46 | 0,42 | 0,42 | 0,46 | 0,49 |

Beispiel 6

Entölen von Bohrkernen durch Heißwasserfluten

Auf die in Beispiel 5 angegebene Weise wurden mit den gleichen Bohrkernen und dem gleichen Rohöl Entölungsversuche mit Substanz D durchgeführt. Die Versuchsbedingungen waren möglichst identisch mit den Bedingungen in Beispiel 5, nur das Fluten der Bohrkerne erfolgte bei einem etwas geringeren mittleren Druck von 20 bis 25 bar. Tabelle 8 gibt die relevanten physikalischen Daten der Substanz D wieder, Tabelle 10 enthält die Versuchsergebnisse eines Vergleichsversuches ohne Anwendung einer Substanz und von zwei Flutversuchen mit Substanz D.

#### Tabelle 9

Substanz D
Chemische Zusammensetzung: 4,4'-Dihydroxybiphenyl
Schmelzpunkt: 275°C
Dichte: 1,25
Löslichkeit in destilliertem Wasser und in simuliertem Lagerstättenwasser

| T (°C) | 20 | 40 | 60 | 80 | 100 | 200 |
|---|---|---|---|---|---|---|
| L. in dest. Wasser (kg/m³) | 0,034 | 0,106 | 0,245 | 0,512 | 1,470[+] | 60 |
| L. in simuliertem Lagerstättenwasser | 0,024 | 0,054 | 0,119 | 0,295 | 0,940 | |

[+] Literaturwert: 1,3

#### Tabelle 10

**Verbesserung des Ölverdrängungsgrades beim Heißwasserfluten**

| Substanz | keine | D | D |
|---|---|---|---|
| Initiale Ölmenge ($m^3.10^{-6}$) | 3,35 | 3,35 | 2,75 |
| Initiale Ölsättigung $S_{oi}$ | 0,88 | 0,875 | 0,88 |
| Initiale Kerntemperatur (°C) | 21 | 21 | 21 |
| Fluttemperatur (°C) | 180 | 180 | 180 |
| Transportkapazität des Heißwassers (kg/cm³) | – | 32,0 | 32,0 |
| Injektionsrate ($m^3 s^{-1}.10^{-9}$) | 7,67 | 8,83 | 5,72 |
| Frontgeschwindigkeit ($m.s^{-1}.10^{-6}$) | 6,54 | 6,67 | 6,94 |
| Errechnete Substanzsättigung $S_s$(%PV) | – | 3,7 | 2,7 |

Tabelle 10 (Fortsetzung)

| Verbesserung des Ölverdrängungsgrades beim Heißwasserfluten | | | |
|---|---|---|---|
| Injektionsmenge (PV) | 1,8 | 2,1 | 1,6 |
| Prouzierte Ölmenge ($m^3.10^{-6}$) | 1,13 | 1,5 | 1,30 |
| Restölsättigung $S_{or}$ | 0,58 | 0,48 | 0,45 |
| Ölverdrängungsgrad $E_d$ | 0,34 | 0,45 | 0,47 |

**Beispiel 7**
Dampffluten ölgesättigter Bohrkerne

Die Vorbereitung der Bohrkerne und ihre Sättigung mit Rohöl erfolgte so wie es in Beispiel 5 beschrieben wurde.

Durch Verdampfung deionisierten Wassers im Wirbelschichterhitzer der Flutanlage wurde Sattdampf von 245 °C hergestellt, während des Durchströmens des auf 245 °C thermostatierten Substanzbehälters mit der sublimierbaren Substanz B bei dieser Temperatur gesättigt und in einen ölgesättigten Bohrkern injiziert. Das Fortschreiten der Temperaturfront in der Lagerstätte wurde in der nachfolgend beschriebenen Weise simuliert. Der in ein Stahlrohr eingebaute Bohrkern befand sich zu Beginn des Flutversuches außerhalb der auf 245 °C thermostatierten Heizkammer der Flutanlage und hatte eine Temperatur von 21 °C. Während des Flutvorganges wurde der Kern langsam mit konstanter Geschwindigkeit in die Heizkammer eingeschoben. Die Temperaturfront befand sich jeweils am Eingang der Heizkammer.

Der Dampfflutversuch mit Substanz B wurde unter geringfügig geänderten Bedingungen wiederholt. Weiters wurde ein Vergleichsversuch ohne Substanz B durchgeführt. Die Ergebnisse sind in Tabelle 11 zusammengefaßt.

Tabelle 11

| Dampffluten ölgesättigter Bohrkerne | | | |
|---|---|---|---|
| Substanz | keine | B | B |
| Initiale Ölsättigung $S_{oi}$ | 0,87 | 0,91 | 0,87 |
| Initiale Kerntemperatur (°C) | 21 | 21 | 21 |
| Fluttemperatur (°C) | 245 | 245 | 245 |
| Transportkapazität des Dampfes (kg/kg) | – | 0,0061 | 0,0061 |
| Injektionsrate ($m^3.s^{-1}.10^{-9}$) | 20,5 | 21,8 | 23,3 |
| Geschwindigkeit der Dampffront ($m.s^{-1}.10^{-6}$) | 5,56 | 5,83 | 6,67 |
| Errechnete Substanzsättigung $S_s$ (%PV) | – | 2,6 | 2,4 |
| Druckdifferenz nach 2,0 PV (bar) | 1,5 | 4,8 | 3,0 |
| Druckdifferenz nach 3,0 PV (bar) | 0,4 | 1,1 | 1,4 |
| Druckdifferenz nach 3,8 PV (bar) | 0,2 | 0,9 | 0,9 |
| Injektionsmenge bei Dampfdurchbruch (PV) | 5,8 | 5,9 | 5,5 |
| Verdrängungsgrad $E_d$ | 0,75 | 0,76 | 0,73 |
| Restölsättigung $S_{or}$ | 0,22 | 0,22 | 0,24 |

**Patentansprüche**

1. Verfahren zur verbesserten Entölung unterirdischer Erdöllagerstätten durch selektive und reversible Verringerung der Durchlässigkeit beim Heißwasser- und/oder Dampffluten, dadurch gekennzeichnet, daß über eine oder mehrere Injektionsbohrungen zumindest zeitweise Heißwasser und/oder Wasserdampf als Flutmedium in die Lagerstätte injiziert wird, das in wirksamer Menge eine oder mehrere bei Lagerstättentemperatur wenig wasser- und öllösliche, in Heißwasser und/oder Wasserdampf jedoch gut lösliche oder flüchtige Substanzen, deren Schmelzpunkt über der Lagerstättentemperatur liegt, wie 2,6-Dihydroxynaphthalin, 1,5-Dihydroxynaphthalin, Leukoaurin, Tyrosin, 9,10-Anthrachinon, Acridon oder 4,4'-Dihydroxybiphenyl enthält, die sich mit dem Heißwasser oder dem Dampf durch die Lagerstätte bewegen und die bevorzugt an jenem Teil der Temperaturfront, der sich am raschesten vorwärtsbewegt, durch Abscheiden als Feststoff die Poren der Lagerstätte temporär und reversibel verengen, bis sich durch nachströmendes Flutmedium der Feststoff wieder auflöst oder verflüchtigt, wodurch insgesamt eine areale und vertikale Vergleichmäßigung der Temperaturfront erfolgt.

2. Verfahren nach Anspruch 1, dadurch gekennzeichnet, daß das Flutmedium Heißwasser ist.

3. Verfahren nach Anspruch 1, dadurch gekennzeichnet, daß das Flutmedium Wasserdampf ist.

4. Verfahren nach Anspruch 1, dadurch gekennzeichnet, daß das Flutmedium ein Gemisch aus Heißwasser und Wasserdampf ist.

5. Verfahren nach den Ansprüchen 1, 2 und 4, dadurch gekennzeichnet, daß die in Heißwasser lösliche Substanz 1,5-Dihydroxynaphthalin ist.

6. Verfahren nach den Ansprüchen 1, 2 und 4, dadurch gekennzeichnet, daß die in Heißwasser lösliche Substanz 4,4'-Dihydroxybiphenyl ist.

7. Verfahren nach den Ansprüchen 1, 3 und 4, dadurch gekennzeichnet, daß die in Wasserdampf flüchtige Substanz 9,10-Anthrachinon ist.

8. Verfahren nach den Ansprüchen 1 bis 7, dadurch gekennzeichnet, daß die wirksame Substanzmenge dem Flutmedium kontinuierlich oder diskontinuierlich in einer Konzentration von 0,0002 bis 0,3 kg Substanz/kg Flutmedium beigesetzt wird.

9. Verfahren nach den Ansprüchen 1 bis 8, dadurch gekennzeichnet, daß die wirksame Substanzmenge dem Flutmedium kontinuierlich in einer Konzentration von 0,0002 bis 0,5 kg Substanz/kg Flutmedium beigesetzt wird.

10. Verfahren nach den Ansprüchen 1 bis 8, dadurch gekennzeichnet, daß die wirksame Substanzmenge dem Flutmedium diskontinuierlich in einer Konzentration von 0,002 bis 0,3 kg Substanz/kg Flutmedium beigesetzt wird.

## Claims

1. Process for the enhanced oil recovery of underground mineral oil deposits by selective, reversible reduction of the permeability using hot-water and/or steam flooding, characterized in that hot water and/or water vapour is injected, at least at times, into the deposit via one or more injection boreholes, as a flooding medium which contains an active amount of one or more substances scarcely water- and oil-soluble at the temperature of the deposit but well soluble or volatile in hot water and/or water vapour, the melting point of which lies above the temperature of the deposit, such as 2,6-dihydroxynaphthalene, 1,5-dihydroxynaphthalene, leucoaurine, tyrosine, 9,10-anthraquinone, acridone or 4,4'-dihydroxybiphenyl and which move with the hot water or the steam through the deposit and which, by precipitation as a solid, temporarily and reversibly constrict the pores of the deposit preferably at that part of the temperature front which is advancing fastest, until flooding medium flowing on after dissolves or evaporates the solid again, which has the overall effect of an areal and vertical equalization of the temperature front.

2. Process according to claim 1, characterized in that the flooding medium is hot water.

3. Process according to claim 1, characterized in that the flooding medium is water vapour.

4. Process according to claim 1, characterized in that the flooding medium is a mixture of hot water and water vapour.

5. Process according to claims 1, 2 and 4, characterized in that the substance soluble in hot water is 1,5-dihydroxynaphthalene.

6. Process according to claims 1, 2 and 4, characterized in that the substance soluble in hot water is 4,4'-dihydroxybiphenyl.

7. Process according to claims 1, 3 and 4, characterized in that the substance volatile in water vapour is 9,10-anthraquinone.

8. Process according to claims 1 to 7, characterized in that the effective substance volume is added to the flooding medium continuously of discontinuously at a concentration of 0.0002 to 0.3 kg substance/kg flooding medium.

9. Process according to claims 1 to 8, characterized in that the effective substance volume is added to the flooding medium continuously at a concentration of 0.0002 to 0.05 kg substance/kg flooding medium.

10. Process according to claims 1 to 8, characterized in that the effective substance volume is added to the flooding medium discontinuously at a concentration of 0.002 to 0.3 kg substance/kg flooding medium.

## Revendications

1. Procédé pour améliorer le drainage des gisements pétrolifères souterrains par diminution sélective et réversible de la perméabilité, lors de l'injection d'eau chaude et/ou de vapeur, caractérisé en ce qu'on injecte, par un ou plusieurs perçages d'injection, au moins de façon intermittente, de l'eau chaude et/ou de la vapeur d'eau, comme fluide d'injection, dans le gisement, laquelle renferme en proportion efficace une ou plusieurs substances peu solubles dans l'eau et le pétrole à la température du gisement, mais bien solubles ou volatiles dans l'eau chaude et/ou la vapeur d'eau, dont le point de fusion est supérieur à la température du gisement, le 2,6-dihydroxynaphtalène, le 1,5-dihydroxynaphtalène, la leucoaurine, la tyrosine, la 9,10-anthraquinone, l'acridone ou le 4,4'-dihydroxybiphényle qui se déplacent à travers le gisement avec l'eau chaude ou la vapeur et qui rétrécissent, de préférence à la partie du front de température qui avance le plus vite, par séparation sous la forme de matière solide, les pores du gisement de façon temporaire et réversible, jusqu'à ce que sous l'effet du fluide d'injection qui suit, le solide se redissolve ou se revolatilise, de sorte qu'on obtient au total une homogénéisation en surface et verticale du front de température.

2. Procédé selon la revendication 1, caractérisé en ce que le fluide d'injection est l'eau chaude.

3. Procédé selon la revendication 1, caractérisé en ce que le fluide d'injection est la vapeur d'eau.

4. Procédé selon la revendication 1, caractérisé en ce que le fluide d'injection est un mélange d'eau chaude et de vapeur d'eau.

5. Procédé selon les revendications 1, 2 et 4, caractérisé en ce que la substance soluble dans l'eau chaude est le 1,5-dihydroxynaphtalène.

6. Procédé selon les revendications 1, 2 et 4, caractérisé en ce que la substance soluble dans l'eau chaude est le 4,4'dihydroxybiphényle.

7. Procédé selon les revendications 1, 3 et 4, caractérisé en ce que la substance volatile dans la vapeur d'eau est la 9,10-anthraquinone.

8. Procédé selon les revendications 1 à 7, caractérisé en ce que la quantité de substance active est ajoutée au fluide d'injection en continu ou en discontinu à une concentration de 0,0002 à 0,3 kg de substance par kg de fluide d'injection.

9. Procédé selon les revendications 1 à 8, caractérisé en ce que la quantité de substance active est ajoutée au fluide d'injection en continu à une concentration de 0,0002 à 0,05 kg de substance par kg de fluide d'injection.

10. Procédé selon les revendications 1 à 8, caractérisé en ce que la quantité de substance active est ajoutée au fluide d'injection en discontinu à une concentration de 0,002 à 0,3 kg de substance par kg de fluide d'injection.

Fig 1